(19) Europäisches Patentamt / European Patent Office / Office européen des brevets

(11) **EP 4 326 910 B1**

(12) **EUROPÄISCHE PATENTSCHRIFT**

(45) Veröffentlichungstag und Bekanntmachung des Hinweises auf die Patenterteilung:
**15.04.2026 Patentblatt 2026/16**

(21) Anmeldenummer: **22724094.2**

(22) Anmeldetag: **21.04.2022**

(51) Internationale Patentklassifikation (IPC):
*C13B 5/04* (2011.01)      *C13B 10/00* (2011.01)
*C13B 10/02* (2011.01)     *C13B 10/12* (2011.01)
*C13K 1/00* (2006.01)      *G01N 21/359* (2014.01)
*C13B 10/06* (2011.01)     *G01N 21/84* (2006.01)
*C13B 5/06* (2011.01)

(52) Gemeinsame Patentklassifikation (CPC):
**C13B 5/06; C13B 10/02; C13B 10/12;**
**G01N 21/359;** G01N 2021/8416; G01N 2021/8466

(86) Internationale Anmeldenummer:
**PCT/EP2022/060614**

(87) Internationale Veröffentlichungsnummer:
**WO 2022/223728 (27.10.2022 Gazette 2022/43)**

(54) **VERFAHREN ZUR ERZEUGUNG VON ROHSAFT FÜR DIE HERSTELLUNG VON ZUCKER, VERFAHREN ZUR HERSTELLUNG VON ZUCKER UND ZUCKERPRODUKTIONSANLAGE**

METHOD FOR PRODUCING RAW JUICE FOR SUGAR PRODUCTION, METHOD FOR PRODUCING SUGAR AND SUGAR PRODUCTION PLANT

PROCÉDÉ DE PRODUCTION DE JUS BRUT POUR LA FABRICATION DE SUCRE, PROCÉDÉ DE FABRICATION DE SUCRE ET INSTALLATION DE PRODUCTION DE SUCRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.04.2021 EP 21170221**

(43) Veröffentlichungstag der Anmeldung:
**28.02.2024 Patentblatt 2024/09**

(60) Teilanmeldung:
**26154374.8**

(73) Patentinhaber: **Pfeifer & Langen IP GmbH**
**50858 Köln (DE)**

(72) Erfinder:
• **BURKHARDT, Mark-Oliver**
**64319 Pfungstadt (DE)**
• **KLOSTERHALFEN, Wolfgang**
**50170 Kerpen (DE)**

(74) Vertreter: **Kutzenberger Wolff & Partner**
**Waidmarkt 11**
**50676 Köln (DE)**

(56) Entgegenhaltungen:
WO-A1-2020/027731      CN-A- 102 230 885
US-A1- 2010 285 186    US-B1- 6 630 672

## Beschreibung

### Stand der Technik

Die vorliegende Erfindung betrifft ein Verfahren zur Erzeugung von Rohsaft für die Herstellung von Zucker, wobei einer als Extraktionsturm oder Diffusionstrog ausgebildeten Extraktionseinrichtung Zuckerrübenschnitzel zugeführt werden und Zuckerrübenschnitzelreste sowie Rohsaft aus der Extraktionseinrichtung abgezogen werden. Ferner betrifft die Erfindung ein Verfahren zur Herstellung von Zucker. Ein weiterer Gegenstand der Erfindung ist eine Zuckerproduktionsanlage mit einer Extraktionseinrichtung, beispielsweise einem Extraktionsturm oder einem Diffusionstrog, welcher Zuckerrübenschnitzel zugeführt und aus welcher Zuckerrübenschnitzelreste sowie Rohsaft abgezogen werden können.

Die Erzeugung von Rohsaft bildet üblicherweise einen der ersten Verfahrensschritte der industriellen Zuckerproduktion, der in der Zuckerproduktionsanlage durchgeführt wird. Die in der Zuckerproduktionsanlage angelieferten Zuckerrüben werden in der Regel gewaschen, um anhaftende Substanzen zu entfernen. Die gereinigten Zuckerrüben werden dann zu Zuckerrübenschnitzeln zerkleinert. Die eigentliche Erzeugung des Rohsafts erfolgt in einer Extraktionseinrichtung, welcher die Zuckerrübenschnitzel zugeführt werden. Es sind verschiedene Bauarten von Extraktionseinrichtungen bekannt, beispielsweise Extraktionstürme oder Diffusionströge. Gemein ist diesen, dass die Zuckerrübenschnitzel in einem Gegenstromverfahren mit heißem Wasser beaufschlagt werden. Der Rohsaft, welcher ca. 92% bis 95% der in den Zuckerrübenschnitzel enthaltenen Saccharose und einige Nichtzuckerstoffe enthält, wird dabei durch Diffusion / Extraktion gewonnen. Bei der Extraktion fallen ferner Zuckerrübenschnitzelreste an, die typischerweise zu Pellets gepresst und als Viehfutter verwendet werden.

In der industriellen Zuckerproduktion, insbesondere im Extraktionsprozess, ist eine sorgfältige Einstellung und ggf. Nachführung von Prozessparametern unerlässlich. Daher ist es erforderlich, die Zuckerrübenschnitzel und/oder die Zuckerrübenschnitzelreste und/oder den gewonnen Rohsaft auf Inhaltsstoffe zu untersuchen. Hierzu ist es gemäß dem Stand der Technik üblich, Proben zu entnehmen und diese in einem Labor zu untersuchen. Die Probenentnahme und anschließende Untersuchung im Labor ist mit einer gewissen Durchlaufzeit verbunden, die abgewartet werden muss, bevor die Ergebnisse der Analyse zur Verfügung stehen und Reaktionen, z.B. eine Nachführung von Prozessparametern möglich ist.

In der WO 2020/027 731 A1 wird ein Trennprozess beschrieben, bei dem Kristallzucker durch Zentrifugation aus einem Dicksaft-Kristallzucker-Gemisch, also Magma oder Massecuite, abgetrennt wird. Die WO 2020/027 731 A1 schlägt in diesem Zusammenhang vor, ein analytisches Verfahren, wie beispielswiese Nahinfrarotspektroskopie (NIRS) zu verwenden, um ein Spektrum abzuleiten, welches die Konzentration von Phenolen oder Flavonoiden in dem Dicksaft-Kristallzucker-Gemisch anzeigt. Anhand dieser Informationen können geeignete Betriebsparameter der Zentrifuge festgelegt werden.

Die US 6 630 672 B1 beschreibt ein Verfahren und ein System zur on-line-Messung eines Stroms aus zerkleinertem Zuckerrohr mittels Nahinfrarotspektroskopie.

### Offenbarung der Erfindung

Vor diesem Hintergrund ist es Aufgabe der vorliegenden Erfindung, die Bilanzierung von Inhaltsstoffen der Edukte und/oder Produkte im Extraktionsprozess mit geringerem Aufwand zu ermöglichen, insbesondere mit geringerem zeitlichen Aufwand und/oder Laboraufwand.

Zur Lösung der Aufgabe wird ein Verfahren zur Erzeugung von Rohsaft für die Herstellung von Zucker mit den Merkmalen des Patentanspruchs 1 vorgeschlagen.

Bei dem erfindungsmäßen Verfahren werden mehrere Nahinfrarotspektroskopie-Vorrichtungen eingesetzt, um Messdaten betreffend die der Extraktionseinrichtung zugeführten Zuckerrübenschnitzel und der aus der Extraktionseinrichtung abgezogenen Zuckerrübenschnitzelreste und des Rohsafts zu erfassen. Diese Nahinfrarotspektroskopie-Vorrichtungen ermöglichen die kontaktlose Bestimmung von Inhaltsstoffen der Zuckerrübenschnitzel und der Zuckerrübenschnitzelreste und des Rohsafts. Zudem bietet die Verwendung von Nahinfrarotspektroskopie-Vorrichtungen den Vorteil, dass auf eine zeitaufwändige Probenentnahme und Untersuchung in einem Labor verzichtet werden kann. Vielmehr ist es mit dem erfindungsgemäßen Verfahren möglich, die Bestimmung der Inhaltsstoffe im laufenden Produktionsprozess durchzuführen, ohne Zuckerrübenschnitzel und/oder Zuckerrübenschnitzelreste und/oder Rohsaft zu entnehmen. Durch die Nahinfrarotspektroskopie-Vorrichtung(en) wird ferner die Analyse und/oder Steuerung der Extraktionseinrichtung und/oder anderer Einrichtungen bzw. Verfahrensschritte im Zuckerproduktionsprozess ermöglicht.

Die mehreren Nahinfrarotspektroskopie-Vorrichtungen - auch NIRS-Vorrichtungen bezeichnet - erfassen Messdaten, aus denen Rückschlüsse auf die Inhaltsstoffe der untersuchten Zuckerrübenschnitzel, Zuckerrübenschnitzelreste und des Rohsafts gezogen werden können. Die jeweilige NIRS-Vorrichtung macht dabei Gebrauch von einem Verfahren, bei dem das zu untersuchende Edukt bzw. Produkt mit elektromagnetischer Strahlung im nahen Infrarotbereich bestrahlt wird, z.B. in einem Spektralbereich von 400 nm bis 2.500 nm. Durch derartige Bestrahlung kann es zur Anregung von Molekülschwingungen in dem untersuchten Material kommen. Die durch die Molekülschwingungen ausgelöste elektromagnetische Strahlung im Nahinfrarotbereich, z.B. in einem Spektralbereich von 400 nm bis 2.500 nm, wird detektiert und spektroskopisch aufgelöst. Aus den erfassten Spektren können Art und/oder Menge von Inhaltstoffen der untersuchten Materialien ermittelt werden.

Die Zuckerrübenschnitzel und/oder Zuckerrübenschnitzelreste und/oder der Rohsaft können ohne weitere Behandlung mit der jeweiligen Nahinfrarotspektroskopie-Vorrichtung erfasst werden. Eine Entnahme der Zuckerrübenschnitzel und/oder Zuckerrübenschnitzelreste aus dem Produktionsfluss und/oder eine Aufbereitung ist nicht erforderlich.

Im Hinblick auf den Rohsaft kann es vorteilhaft sein, wenn die dritte Nahinfrarotspektroskopie-Vorrichtung in einer Bypass-Leitung angeordnet ist, in welche der Rohsaft eingeleitet wird und zur Erfassung der dritten Messdaten ein stehender Rohsaft erzeugt wird. Die Erfassung der dritten Messdaten kann bei dem flüssigen Rohsaft mit verbesserter Reproduzierbarkeit erfolgen, wenn dieser sich nicht bewegt. Nach der Durchführung der Messung an dem stehenden Rohsaft kann dieser wieder in den Produktionsfluss zurückgeführt werden.

Bevorzugt können die mit der jeweiligen Nahinfrarotspektroskopie-Vorrichtung erfassten Messdaten durch mehrere Messungen aus verschiedenen Richtungen hervorgehen. Hierzu kann vorgesehen sein, dass die jeweilige Nahinfrarotspektroskopie-Vorrichtung mehrere Detektoren umfasst, die gegenüber dem untersuchten Material unterschiedlich orientiert angeordnet sind. Durch eine derartige kontaktlose Messung aus mehreren Richtungen können die Inhaltsstoffe mit erhöhter Genauigkeit aus den jeweiligen Messdaten ermittelt werden.

Gemäß der Erfindung ist vorgesehen, dass mit einer optischen Bilderfassungsvorrichtung eine oder mehrere geometrische Eigenschaften der Zuckerrübenschnitzel, insbesondere eine Länge und/oder eine Breite und/oder eine Querschnittsfläche, bestimmt werden. Die zusätzlich bestimmten optisch erfassbaren Eigenschaften der Zuckerrübenschnitzel können die Analyse und/oder Nachführung des Extraktionsprozesses verbessern. Die optische Bilderfassungsvorrichtung ist bevorzugt auf denselben Bereich des Produktionsflusses gerichtet wie die erste Nahinfrarotspektroskopie-Vorrichtung, so dass die ersten Messdaten der Nahinfrarotspektroskopie-Vorrichtung und die durch die optische Bilderfassungseinrichtung bestimmte Eigenschaften sich auf identische Zuckerrübenschnitzel beziehen.

Bevorzugt ist vorgesehen, dass die aus der Extraktionseinrichtung abgezogenen Zuckerrübenschnitzelreste gepresst werden, wobei Restwasser anfällt und mit einer vierten Nahinfrarotspektroskopie-Vorrichtung vierte Messdaten betreffend das beim Pressen der Zuckerrübenschnitzelreste entstehende Restwasser erfasst werden.

Besonders bevorzugt ist die vierte Nahinfrarotspektroskopie-Vorrichtung in einer Bypass-Leitung angeordnet, in welche das Restwasser eingeleitet wird und zur Erfassung der vierten Messdaten stehendes Restwasser erzeugt wird. Die Erfassung der vierten Messdaten kann bei dem Restwasser mit verbesserter Reproduzierbarkeit erfolgen, wenn dieses sich nicht bewegt. Nach der Durchführung der Messung an dem stehenden Restwasser kann dieses aus der Bypass-Leitung abgezogen werden.

Besonders vorteilhaft ist es, wenn die aus der Extraktionseinrichtung abgezogenen Zuckerrübenschnitzelreste gepresst werden, wobei Restwasser anfällt und mit einer fünften Nahinfrarotspektroskopie-Vorrichtung fünfte Messdaten betreffend die beim Pressen der Zuckerrübenschnitzelreste erhaltenen gepressten Zuckerrübenschnitzelreste erfasst werden.

Das erfindungsgemäße Verfahrens sieht vor, dass mindestens ein Prozessparameter der Extraktionseinrichtung in Abhängigkeit von den ersten Messdaten und den geometrischen Eigenschaften der Zuckerrübenschnitzel und in Abhängigkeit den zweiten Messdaten und/oder dritten Messdaten eingestellt wird. Durch das Einstellen der Prozessparameter in Abhängigkeit von den durch mehrere der Nahinfrarotspektroskopie-Vorrichtungen erfassten Messdaten und der durch die optische Bilderfassungseinrichtung bestimmten Eigenschaften kann ein Nachführen von Prozessparametern der Extraktionseinrichtung mit geringer Latenz erfolgen. Bei dem Prozessparameter kann es sich beispielsweise um eine Extraktionszeit handeln, die angibt, für welche Dauer die Zuckerrübenschnitzel in der Extraktionseinrichtung verweilen und/oder eine Extraktionstemperatur, die angibt, bei welcher Temperatur die Extraktionseinrichtung betrieben wird. Alternativ oder zusätzlich kann es sich bei dem Prozessparameter um eine Frischwassermenge handeln, die der Extraktionseinrichtung zugeführt wird und/oder um einen Füllstand in der Extraktionseinrichtung. Beispielsweise kann anhand der ersten und/oder zweiten und/oder dritten Messdaten eine Ausbeute des Extraktionsprozesses bestimmt werden, wobei dann, wenn die Ausbeute sinkt eine Frischwassermenge in der Extraktionseinrichtung und/oder die Extraktionstemperatur vergrößert wird.

Eine vorteilhafte Ausgestaltung des Verfahrens sieht vor, dass die Zuckerrübenschnitzel mit einer Schneidemaschine aus Zuckerrüben geschnitten werden und ein Prozessparameter der Schneidemaschine in Abhängigkeit von den ersten Messdaten und/oder den zweiten Messdaten und/oder dritten Messdaten und/oder ggf. der oder den geometrischen Eigenschaften der Zuckerrübenschnitzel eingestellt wird. Das Einstellen der Prozessparameter in Abhängigkeit von den durch eine oder mehrere der Nahinfrarotspektroskopie-Vorrichtung(en) erfassten Messdaten und/oder der durch die optische Bilderfassungseinrichtung bestimmten Eigenschaften kann ein Nachführen von Prozessparametern der Schneidemaschine mit geringer Latenz erfolgen. Beispielsweise kann erkannt werden, dass eine geometrische Eigenschaft, beispielsweise eine Länge und/oder eine Breite und/oder eine Querschnittsfläche und/oder eine spezifische Oberfläche kleiner ist als ein vorgegebener Mindestwert und ein Prozessparameter der Schneidemaschine kann derart modifiziert werden, dass größere Zuckerrübenschnitzel geschnitten werden. Oder es kann erkannt werden, dass die geometrische Eigenschaft, größer ist als ein vorgegebener Maximalwert und ein Prozessparameter der Schneidemaschine kann derart modifiziert werden, dass kleinere Zuckerrübenschnitzel geschnitten werden. Die geometrische Eigenschaft kann als Maß einer Verteilung der Länge und/oder Verteilung der Breite und/oder Verteilung der Querschnittsfläche und/oder Verteilung der Oberfläche ermittelt werden. Besonders geeignet ist es, wenn als geometrische Eigenschaft der Zuckerrübenschnitzel eine Längenverteilung und/oder eine Verteilung der spezifischen Oberfläche ermittelt wird. Gleichmäßig lange Zuckerrübenschnitzel führen zu einem guten Extraktionsergebnis, da sie eine große Oberfläche bieten und gleichzeitig durch ihre Länge dazu beitragen, dass das Gemisch aus Wasser und Zuckerrübenschnitzeln gut durchströmt werden kann. Kurze Zuckerrübenschnitzel weisen zwar eine große Oberfläche auf, erschweren aber den Stoffaustausch in die Trennung von Zuckerrübenschnitzeln und Saft, beispielsweise Bodensieben eines Extraktionsturms. Ein hoher Anteil nur teilweise geschnittener Zuckerrüben, beispielsweise in Form von Scheiben, führt zu einer geringeren Oberfläche und damit einem schlechteren Stoffübergang. Gleichmäßig lange Zuckerrübenschnitzel bieten eine bessere Abpressung in den Schnitzelpressen und somit einen geringeren Energieverbrauch sowie eine verbesserte Rückgewinnung von Restzuckermengen aus den Zuckerrückenschnitzeln.

Zur Lösung eingangs genannter Aufgabe wird ferner ein Verfahren zur Herstellung von Zucker vorgeschlagen, wobei gemäß einem vorstehend beschriebenen Verfahren Rohsaft hergestellt wird und in nachfolgenden Prozessschritten aus dem Rohsaft Zucker hergestellt wird.

Bei dem Verfahren zur Herstellung von Zucker können dieselben Vorteile erreicht werden, die bereits im Zusammenhang mit dem Verfahren zur Erzeugung von Rohsaft beschrieben worden sind.

Gemäß einer vorteilhaften Ausgestaltung des Verfahrens zur Herstellung von Zucker ist vorgesehen, dass mindestens ein Prozessparameter eines der nachfolgenden Prozessschritte in Abhängigkeit von den ersten Messdaten und/oder den zweiten Messdaten und/oder dritten Messdaten und/oder ggf. der oder den geometrischen Eigenschaften der Zuckerrübenschnitzel eingestellt wird. Das Einstellen der Prozessparameter in Abhängigkeit von den durch eine oder mehrere der Nahinfrarotspektroskopie-Vorrichtung(en) erfassten Messdaten und/oder der durch die optische Bilderfassungseinrichtung bestimmten Eigenschaften kann ein Nachführen von Prozessparametern eines der nachfolgenden Prozessschritte mit geringer Latenz erfolgen.

Bevorzugt ist vorgesehen, dass der nachfolgende Prozessschritt ein Kalkungsschritt oder ein Karbonisierungsschritt oder ein Filtrierungsschritt oder ein Eindickungsschritt oder ein Kristallisationsschritt oder ein Trennschritt ist. In dem Kalkungsschritt kann beispielsweise als Prozessparameter eine Kalkmilchzugabemenge, eine Kalkmilchzusammensetzung bzw. -konzentration, ein pH-Wert, eine Zugabemenge an gefälltem Calciumcarbonat (engl. *precipitated calcium carbonate,* kurz PCC) oder eine Schlammsaftrücknahme eingestellt werden. In dem Eindickungsschritt und/oder Kristallisationsschritt kann beispielsweise als Prozessparameter eine Temperatur oder eine Verweilzeit eingestellt werden.

Neben den vorstehend erläuterten vorteilhaften Ausgestaltungen können bei dem Verfahren zu Herstellung von Zucker auch die im Zusammenhang mit dem Verfahren zur Erzeugung von Rohsaft beschriebenen vorteilhaften Ausgestaltungen und Merkmale allein oder in Kombination Anwendung finden.

Die Erfindung betrifft ferner eine Zuckerproduktionsanlage mit den Merkmalen des Patentanspruchs 12.

Bei der Zuckerproduktionsanlage können dieselben Vorteile erreicht werden, die bereits im Zusammenhang mit dem Verfahren zur Herstellung von Zucker beschrieben worden sind.

Die erfindungsgemäße Zuckerproduktionsanlage umfasst eine optische Bilderfassungseinrichtung zur Bestimmung einer oder mehrerer geometrischer Eigenschaften der Rübenschnitzel, insbesondere einer Länge und/oder einer Breite und/oder einer Querschnittsfläche. Durch die zusätzliche Bestimmung optisch erfassbarer Eigenschaften der Zuckerrübenschnitzel kann die Analyse und/oder Nachführung des Extraktionsprozesses weiter verbessert werden. Die optische Bilderfassungsvorrichtung ist bevorzugt auf denselben Bereich des Produktionsflusses gerichtet wie die erste Nahinfrarotspektroskopie-Vorrichtung, so dass die ersten Messdaten der Nahinfrarotspektroskopie-Vorrichtung und die durch die optische Bilderfassungseinrichtung bestimmte Eigenschaften sich auf identische Zuckerrübenschnitzel beziehen.

Eine bevorzugte Ausgestaltung der Erfindung sieht vor, dass die Zuckerproduktionsanlage eine Schneidemaschine zum Schneiden der Zuckerrübenschnitzel aus Zuckerrüben umfasst, wobei die optische Bilderfassungseinrichtung im Ausgabebereich der Schneidemaschine angeordnet ist. Hierdurch wird es möglich, die durch Schneidemaschine geschnittenen Zuckerrübenschnitzel zu analysieren und die Betriebsweise der Scheidemaschine in Abhängigkeit von dieser Analyse einzustellen.

Neben den vorstehend erläuterten vorteilhaften Ausgestaltungen können bei der Zuckerproduktionsanlage auch die im Zusammenhang mit den vorstehend erläuterten Verfahren beschriebenen vorteilhaften Ausgestaltungen und Merkmale allein oder in Kombination Anwendung finden.

Weitere Einzelheiten, Merkmale und Vorteile der Erfindung ergeben sich aus den Zeichnungen, sowie aus der nachfolgenden Beschreibung einer bevorzugten Ausführungsform anhand der Zeichnungen. Die Zeichnungen illustrieren dabei lediglich eine beispielhaft Ausführungsform der Erfindung, welche den Erfindungsgedanken nicht einschränkt.

**Kurze Beschreibung der Figuren**

Die **Fig. 1** zeigt ein Verfahren zur Herstellung von Zucker gemäß einem Ausführungsbeispiel der Erfindung.
Die **Fig. 2** zeigt ein Verfahren zur Erzeugung von Rohsaft gemäß einem Ausführungsbeispiel der Erfindung.

**Ausführungsformen der Erfindung**

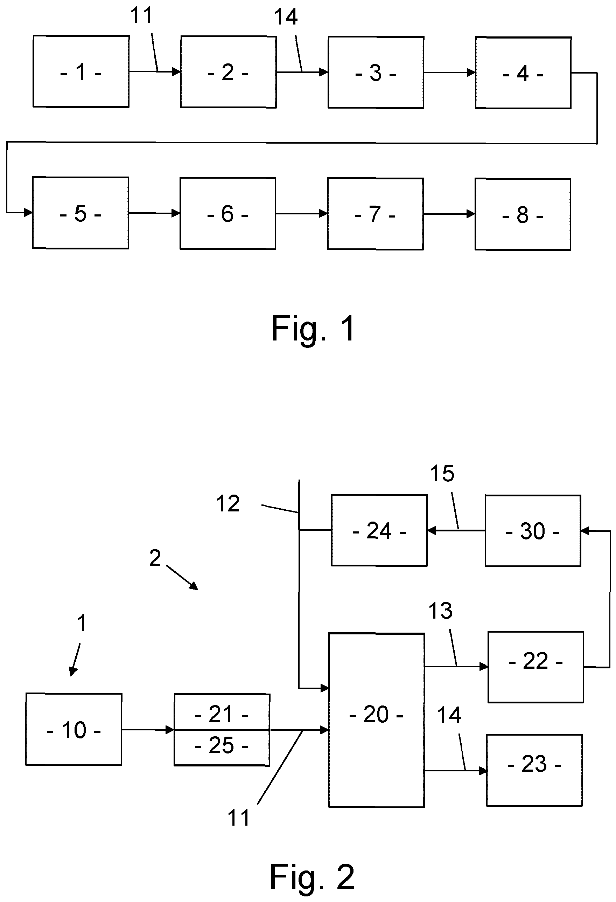

In den verschiedenen Figuren sind gleiche Teile stets mit den gleichen Bezugzeichen versehen und werden daher in der Regel auch jeweils nur einmal benannt bzw. erwähnt.
Das in **Fig. 1** dargestellte Ablaufdiagramm zeigt ein Ausführungsbeispiel eines erfindungsgemäßen Verfahrens zur Herstellung von Zucker, das in einer Zuckerproduktionsanlage durchgeführt wird. Die in der Zuckerproduktionsanlage angelieferten Zuckerrüben werden bevorzugt zunächst gereinigt, also von Anhaftungen, wie beispielsweise Erde, Sand oder Blättern zu befreien. In einem ersten Verfahrensschritt des Schneidens 1 werden die Zuckerrübendurch eine Schneidemaschine zerkleinert, um Zuckerrübenschnitzel 11 zu erhalten.
Die Zuckerrübenschnitzel werden in einem dem Schneiden 1 nachfolgenden Verfahrensschritt der Extraktion 2 oder Saftgewinnung werden die Rübenschnitzel in einer Extraktionseinrichtung Wasser ausgelaugt. Optional können die Zuckerrübenschnitzel zunächst vorgewärmt werden, beispielsweise in einem Bereich von 60 °C bis 80 °C, um die Zellwände durchlässiger zu machen. Die eigentliche Extraktion 2 erfolgt in einem Gegenstromverfahren, bei welchem die Zuckerrübenschnitzel im Gegenstrom zu heißem Wasser durch die Extraktionseinrichtung gefördert bzw. geleitet werden. Als Produkt der Extraktion 2 wird neben Zuckerrübenschnitzelresten der Rohsaft 14 erhalten, welcher fast den gesamten in den Zuckerrüben enthaltenen Zucker enthält. Einzelheiten zur Extraktion 2 werden weiter unten im Zusammenhang mit Fig. 2 erläutert.
Dem Rohsaft 14 wird in einem Verfahrensschritt der Kalkung 3 Kalk in Form von Kalkmilch zugesetzt. Der Kalk bindet in dem Rohsaft 14 enthaltene Nichtzuckerstoffe. Säuren werden neutralisiert und der pH-Wert angehoben.
In dem anschließenden Verfahrensschritt der Karbonisierung 4 wird Kohlendioxid in die Mischung aus Rohsaft und Kalkmilch eingeleitet. Calcium und andere Nichtzuckerstoffe werden gebunden und fallen als Kalk (Calciumcarbonat) aus. In den anschließenden Verfahrensschritt der Filtration 5 wird der Kalk dann abgetrennt und es verbleibt der Dünnsaft. Die Verfahrensschritte der Kalkung 3, Karbonisierung 4 und Filtration 5 werden zusammen auch aus Saftreinigung bezeichnet. Die Schritte Kalkung 3, Karbonisierung 4 und Filtration 5 können optional in dieser Reihenfolge mehrmals, beispielsweise zweimal, hintereinander durchgeführt werden, um das Reinigungsergebnis zu verbessern.
Daran schließt sich der Verfahrensschritt der Eindickung 6 an, in welchem der Dünnsaft in einem meist mehrstufigen Erwärmungsprozess eingedickt wird, um den Dicksaft zu erhalten.
Der Dicksaft wird in einem Verfahrensschritt der Kristallisation 7 bei mäßiger oder hoher Temperatur und Unterdruck Zucker auskristallisiert, beispielsweise bei ca. 70 °C. Die Kristallisation 7 umfasst bevorzugt mehrere aufeinanderfolgende Kristallisationsschritte. Erhalten wird eine Mischung aus Dicksaft und Kristallzucker, die auch als Magma bezeichnet wird.
Schließlich wird in einem in einem Verfahrensschritt des Trennens 8, beispielsweise in einer Zentrifuge, der Kristallzucker abgetrennt.
Bei dem Verfahren gemäß Fig. 1 wird ein erfindungsgemäßer Extraktionsschritt 2 verwendet, der nachfolgend anhand der Darstellung in **Fig. 2** erläutert werden soll.
In dem Extraktionsschritt 2 kommt eine Extraktionseinrichtung 20 zum Einsatz, die als Extraktionsturm oder Diffusionstrog ausgebildet ist. In der Extraktionseinrichtung 20 werden die durch die Schneidemaschine 10 geschnittenen Zuckerrübenschnitzel 11 in einem Gegenstromverfahren mit heißem Wasser 12 beaufschlagt, um den Rohsaft 14 aus den Zuckerrübenschnitzeln 11 auszulaugen. Es verbleiben ausgelaugte Zuckerrübenschnitzelreste 13. Diese werden in einer Presse 30 zum Trocknen gepresst. Das beim Pressen erhaltene Restwasser 15 wird erwärmt und zusammen mit Frischwasser 12 der Extraktionseinrichtung 20 zugeführt.
Um die Bilanzierung von Inhaltsstoffen der Edukte und/oder Produkte im Extraktionsprozess mit geringerem Aufwand zu ermöglichen sind bei dem Extraktionsschritt 2 besondere Maßnahmen ergriffen. So werden mit einer ersten Nahinfrarotspektroskopie-Vorrichtung 21 erste Messdaten betreffend die Zuckerrübenschnitzel 11 erfasst. Eine optischen Bilderfassungsvorrichtung 25 bestimmt, insbesondere simultan, eine oder mehrere geometrische Eigenschaften der Zuckerrübenschnitzel 11, insbesondere eine Länge und/oder eine Breite und/oder eine Querschnittsfläche. Sowohl die erste Nahinfrarotspektroskopie-Vorrichtung 21 als auch die optische Bilderfassungseinrichtung 25 sind im Ausgabebereich der Schneidemaschine 10 angeordnet. Betreffend die aus der Extraktionseinrichtung 20 abgezogenen Zuckerrübenschnitzelreste 13 werden mit einer zweiten Nahinfrarotspektroskopie-Vorrichtung 22 zweite Messdaten erfasst. Und eine dritte Nahinfrarotspektroskopie-Vorrichtung 23 erfasst dritte Messdaten betreffend den Rohsaft 14.
Die dritte Nahinfrarotspektroskopie-Vorrichtung 23 ist dabei in einer Bypass-Leitung angeordnet, in welche der Rohsaft 14 eingeleitet wird und zur Erfassung der dritten Messdaten ein stehender Rohsaft erzeugt wird. Nach der Erfassung der Messdaten wird der Rohsaft 14 dieser wieder in den Produktionsfluss zurückgeführt und der Saftreinigung (Verfahrensschritte 3, 4, 5) zugeführt.

Der Extraktionsschritt nach Fig.2 umfasst zusätzlich eine vierte Nahinfrarotspektroskopie-Vorrichtung 24, mit welcher vierte Messdaten betreffend das beim Pressen der Zuckerrübenschnitzelreste 13 entstehende Restwasser 15 erfasst werden.

Die Messdaten der Nahinfrarotspektroskopie-Vorrichtungen 21, 22, 23, 24 können beispielsweise den Nachweis folgender Inhaltsstoffe bzw. deren Gehalt angeben: Sacharose, Fructose, Glucose, Milchsäure, Oxalsäure, Oxalate, Nitrate, Nitrite, Pektine, Dextrane, Stickstoff. Die optische Bilderfassungsvorrichtung kann zusätzlich Angaben zur Farbe des untersuchten Materials ermitteln, beispielsweise im Lab-Farbraum.

Die Messdaten der Nahinfrarotspektroskopie-Vorrichtungen 21, 22, 23, 24 sowie die geometrischen Eigenschaften der Zuckerrübenschnitzel 11 werden zur Einstellung eines oder mehrerer Prozessparameter der Extraktionseinrichtung 20 herangezogen. So kann beispielsweise eine Extraktionszeit und/oder eine Extraktionsdauer in Abhängigkeit von den Messdaten eingestellt werden. Beispielsweise kann in Abhängigkeit von den ersten Messdaten, also den Inhaltsstoffen bzw. der Zusammensetzung der Zuckerrübenschnitzel 11 eine Extraktionszeit und/oder eine Extraktionsdauer eingestellt werden. Zusätzlich oder alternativ ist es möglich, die Extraktionszeit und/oder eine Extraktionsdauer in Abhängigkeit von den zweiten Messdaten betreffend die Zuckerrübenschnitzelreste 13 und/oder den dritten Messdaten betreffend den Rohsaft 14 einzustellen, so dass die Prozessierung dem gemessenen Material nachfolgenden Zuckerrübenschnitzel 11 verändert werden kann.

Die erfassten Messdaten der Nahinfrarotspektroskopie-Vorrichtungen 21, 22, 23, 24 sowie die geometrischen Eigenschaften der Zuckerrübenschnitzel 11 werden zudem zur Steuerung und/oder Nachführung der im Verfahrensschritt des Schneidens 1 verwendeten Schneidemaschine 10 herangezogen. So kann beispielsweise eine Messerqualität und/oder eine Schnitzelgröße der beim Schneiden 1 erhaltenen Zuckerrübenschnitzel 11 in Abhängigkeit von einer geometrischen Eigenschaft der Zuckerrübenschnitzel 11, beispielsweise der Länge und/oder Breite und/oder Querschnittsfläche eingestellt werden. Darüber hinaus können Prozessparameter eines oder mehrerer der nachfolgenden Prozessschritte 3, 4, 5, 6, 7 oder 8 in Abhängigkeit von den ersten Messdaten und/oder den zweiten Messdaten und/oder dritten Messdaten und/oder den geometrischen Eigenschaften der Zuckerrübenschnitzel eingestellt werden. Das Einstellen der Prozessparameter in Abhängigkeit von den durch eine oder mehrere der Nahinfrarotspektroskopie-Vorrichtung(en) erfassten Messdaten und/oder der durch die optische Bilderfassungseinrichtung bestimmten Eigenschaften kann ein Nachführen von Prozessparametern eines der nachfolgenden Prozessschritte mit geringer Latenz erfolgen.

Durch das vorstehend beschriebene Verfahren und System kann die Bilanzierung von Inhaltsstoffen der Edukte und/oder Produkte im Extraktionsprozess mit geringerem Aufwand ermöglicht werden, insbesondere mit geringem zeitlichen Aufwand und/oder Laboraufwand. Dies ermöglicht eine verbesserte Steuerung der Prozesse in der Zuckerproduktion.

Die Bilanzierung des Extraktionsprozesses kann erfolgen als Differenz der Zuckermenge der Edukte und Produkte, also als

Zuckermenge(Edukte) - Zuckermenge(Produkte)

bzw. durch die Ausbeute, also der Zuckermenge im Rohsaft 14 bezogen auf die Zuckermenge in den Zuckerrübenschnitzeln 11.

Um eine möglichst genaue Steuerung des Extraktionsprozesses erreichen zu können, ist die Kenntnis des Zuckergehalts der aus der Extraktionseinrichtung 20 abgezogenen Zuckerrübenschnitzelreste 13 (Nassschnitzel) wünschenswert. Aufgrund der relativ hohen Feuchtigkeit dieser Zuckerrübenschnitzelreste 13 ist die Bestimmung des Zuckergehalts durch die zweite Nahinfrarotspektroskopie-Vorrichtung allerdings erschwert. Hier kann das Pressen der Zuckerrübenschnitzelreste 13 in der Presse 30 Abhilfe schaffen, wobei das beim Pressen erhaltene Restwasser mit der vierten Nahinfrarotspektroskopie-Vorrichtung 24 vermessen wird und die beim Pressen erhaltenen gepressten Zuckerrübenschnitzel mit einer fünften Nahinfrarotspektroskopie-Vorrichtung vermessen werden. Insofern kann der Zuckergehalt in dem Restwasser und in den gepressten Zuckerrübenschnitzelresten erhalten werden und auf den Zuckergehalt in den aus der Extraktionseinrichtung 20 abgezogenen Zuckerrübenschnitzelreste 13 (Nassschnitzel) rückgeschlossen werden. Mit dieser Kenntnis ist der Extraktionsprozess bilanzierbar zu Stoffmenge(Zuckerrübenschnitzel) * Zuckergehalt(Zuckerrübenschnitzel) - ( Stoffmenge(Rohsaft) * Zuckergehalt (Rohsaft) + Zuckermenge(Zuckerrübenschnitzelreste) ) = Verluste

**Bezugszeichenliste**

1     Verfahrensschritt "Schneiden"

2 Verfahrensschritt "Extraktion"
3 Verfahrensschritt "Kalkung"
4 Verfahrensschritt "Karbonisierung"
5 Verfahrensschritt "Filtration"
6 Verfahrensschritt "Eindickung"
7 Verfahrensschritt "Kristallisation"
8 Verfahrensschritt "Trennen"

10 Schneidemaschine
11 Zuckerrübenschnitzel
12 Wasser
13 Zuckerrübenschnitzelreste
14 Rohsaft
15 Restwasser

20 Extraktionseinrichtung
21 Nahinfrarotspektroskopie-Vorrichtung
22 Nahinfrarotspektroskopie-Vorrichtung
23 Nahinfrarotspektroskopie-Vorrichtung
24 Nahinfrarotspektroskopie-Vorrichtung
25 optische Bilderfassungsvorrichtung
30 Presse

**Patentansprüche**

1. Verfahren zur Erzeugung von Rohsaft (14) für die Herstellung von Zucker, wobei einer als Extraktionsturm oder Diffusionstrog ausgebildeten Extraktionseinrichtung (20) Zuckerrübenschnitzel (11) zugeführt werden und Zuckerrübenschnitzelreste (13) sowie Rohsaft (14) aus der Extraktionseinrichtung (20) abgezogen werden, **dadurch gekennzeichnet, dass**

mit einer ersten Nahinfrarotspektroskopie-Vorrichtung (21) erste Messdaten betreffend die Zuckerrübenschnitzel (11) erfasst werden, die der Extraktionseinrichtung (20) zugeführt werden und
mit einer optischen Bilderfassungsvorrichtung (25) eine oder mehrere geometrische Eigenschaften der Zuckerrübenschnitzel (11) bestimmt werden und
mit einer zweiten Nahinfrarotspektroskopie-Vorrichtung (22) zweite Messdaten betreffend die Zuckerrübenschnitzelreste (13) erfasst werden, die aus der Extraktionseinrichtung (20) abgezogen werden und/oder
mit einer dritten Nahinfrarotspektroskopie-Vorrichtung (23) dritte Messdaten betreffend den Rohsaft (14) erfasst werden, der aus der Extraktionseinrichtung (20) abgezogen wird,
wobei mindestens ein Prozessparameter der Extraktionseinrichtung (20) in Abhängigkeit von den ersten Messdaten und von den geometrischen Eigenschaften der Zuckerrübenschnitzel (11) und in Abhängigkeit von den zweiten Messdaten und/oder dritten Messdaten eingestellt wird.

2. Verfahren nach Anspruch 1, **dadurch gekennzeichnet, dass** die dritte Nahinfrarotspektroskopie-Vorrichtung (23) in einer Bypass-Leitung angeordnet ist, in welche der Rohsaft eingeleitet wird und zur Erfassung der dritten Messdaten ein stehender Rohsaft erzeugt wird.

3. Verfahren nach einem der vorhergehenden Ansprüche, **dadurch gekennzeichnet, dass** die mit der jeweiligen Nahinfrarotspektroskopie-Vorrichtung (21, 22, 23) erfassten Messdaten durch mehrere Messungen aus verschiedenen Richtungen hervorgehen.

4. Verfahren nach einem der vorhergehenden Ansprüche, **dadurch gekennzeichnet, dass** mit der optischen Bilderfassungsvorrichtung (25) eine Länge und/oder eine Breite und/oder eine Querschnittsfläche bestimmt wird.

5. Verfahren nach einem der vorhergehenden Ansprüche, **dadurch gekennzeichnet, dass** die aus der Extraktionseinrichtung abgezogenen Zuckerrübenschnitzel gepresst werden, wobei Restwasser anfällt und mit einer vierten Nahinfrarotspektroskopie-Vorrichtung vierte Messdaten betreffend das beim Pressen der Zuckerrübenschnitzelreste entstehende Restwasser erfasst werden, insbesondere wobei die vierte Nahinfrarotspektroskopie-Vorrichtung in einer Bypass-Leitung angeordnet ist, in welche das Restwasser eingeleitet wird und zur Erfassung der vierten Messdaten stehendes Restwasser erzeugt wird.

6. Verfahren nach einem der vorhergehenden Ansprüche, **dadurch gekennzeichnet, dass** der mindestens eine Prozessparameter eine Extraktionszeit ist, die angibt, für welche Dauer die Zuckerrübenschnitzel in der Extraktionseinrichtung verweilen und/oder eine Extraktionstemperatur ist, die angibt, bei welcher Temperatur die Extraktionseinrichtung betrieben wird.

7. Verfahren nach einem der Ansprüche 1 bis 5, **dadurch gekennzeichnet, dass** der mindestens eine Prozessparameter eine Frischwassermenge ist, die der Extraktionseinrichtung zugeführt wird und/oder ein Füllstand in der Extraktionseinrichtung.

8. Verfahren nach einem der vorhergehenden Ansprüche, **dadurch gekennzeichnet, dass** die Zuckerrübenschnitzel (11) mit einer Schneidemaschine (10) aus Zuckerrüben geschnitten werden und ein Prozessparameter der Schneidemaschine (10) in Abhängigkeit von den ersten Messdaten und/oder den zweiten Messdaten und/oder dritten Messdaten und/oder ggf. der oder den geometrischen Eigenschaften der Zuckerrübenschnitzel (11) eingestellt wird.

9. Verfahren zur Herstellung von Zucker, wobei gemäß einem Verfahren nach einem der vorhergehenden Ansprüche Rohsaft (14) hergestellt wird und in nachfolgenden Prozessschritten aus dem Rohsaft (14) Zucker hergestellt wird.

10. Verfahren Anspruch 9, **dadurch gekennzeichnet, dass** mindestens ein Prozessparameter eines der nachfolgenden Prozessschritte in Abhängigkeit von den ersten Messdaten und/oder den zweiten Messdaten und/oder dritten Messdaten und/oder ggf. der oder den geometrischen Eigenschaften der Zuckerrübenschnitzel (11) eingestellt wird.

11. Verfahren nach Anspruch 10, **dadurch gekennzeichnet, dass** der nachfolgende Prozessschritt ein Kalkungsschritt (3) oder ein Karbonisierungsschritt (4) oder ein Filtrierungsschritt (5) oder ein Eindickungsschritt (6) oder ein Kristallisationsschritt (7) oder ein Trennschritt (8) ist.

12. Zuckerproduktionsanlage mit einer als Extraktionsturm oder Diffusionstrog ausgebildeten Extraktionseinrichtung (20), welcher Zuckerrübenschnitzel (11) zugeführt und aus welcher Zuckerrübenschnitzelreste (13) sowie Rohsaft (14) abgezogen werden können,
**gekennzeichnet durch**

eine erste Nahinfrarotspektroskopie-Vorrichtung (21) zur Erfassung erster Messdaten betreffend Zuckerrübenschnitzel (11), die der Extraktionseinrichtung (20) zugeführt werden und eine optische Bilderfassungseinrichtung (25) zur Bestimmung einer oder mehrerer geometrischer Eigenschaften der Rübenschnitzel (11), und
eine zweite Nahinfrarotspektroskopie-Vorrichtung (22) zur Erfassung zweiter Messdaten betreffend Zuckerrübenschnitzelreste (13), die aus der Extraktionseinrichtung (20) abgezogen werden und/oder
eine dritte Nahinfrarotspektroskopie-Vorrichtung (23) zur Erfassung dritter Messdaten betreffend den Rohsaft (14), der aus der Extraktionseinrichtung (20) abgezogen wird,
wobei die Extraktionseinrichtung (20) dazu eingerichtet ist, mindestens einen Prozessparameter der Extraktionseinrichtung (20) in Abhängigkeit von den ersten Messdaten und von den geometrischen Eigenschaften der Zuckerrübenschnitzel (11) und in Abhängigkeit von den zweiten Messdaten und/oder dritten Messdaten einzustellen.

13. Zuckerproduktionsanlage nach Anspruch 12, **dadurch gekennzeichnet, dass** die jeweilige Nahinfrarotspektroskopie-Vorrichtung (21, 22, 23) mehrere Detektoren umfasst, die gegenüber dem untersuchten Material unterschiedlich orientiert angeordnet sind.

14. Zuckerproduktionsanlage nach einem der Ansprüche 12 oder 13, **dadurch gekennzeichnet, dass** die optische Bilderfassungseinrichtung (25) zur Bestimmung einer Länge und/oder einer Breite und/oder einer Querschnittsfläche eingerichtet ist.

15. Zuckerproduktionsanlage nach Anspruch 14, **gekennzeichnet durch** eine Schneidemaschine (10) zum Schneiden der Zuckerrübenschnitzel (11) aus Zuckerrüben, wobei die optische Bilderfassungseinrichtung (25) im Ausgabebereich der Schneidemaschine (10) angeordnet ist.

**Claims**

1. Process for the production of raw juice (14) for the production of sugar, wherein sugar beet pulp (11) is fed to an extraction device (20) designed as an extraction tower or diffusion trough and sugar beet pulp residues (13) and raw juice (14) are withdrawn from the extraction device (20),
   **characterized in that**

   a first near-infrared spectroscopy device (21) is used to record first measurement data relating to the sugar beet pulp (11) which is fed to the extraction device (20), and
   one or more geometric properties of the sugar beet pulp (11) are determined using an optical image acquisition device (25), and
   a second near-infrared spectroscopy device (22) is used to record second measurement data relating to the sugar beet pulp residues (13) which are extracted from the extraction device (20) and/or
   a third near-infrared spectroscopy device (23) is used to record third measurement data relating to the raw juice (14) which is drawn off from the extraction device (20),
   at least one process parameter of the extraction device (20) being set as a function of the first measurement data and of the geometric properties of the sugar beet pulp (11) and as a function of the second measurement data and/or third measurement data.

2. Method according to claim 1, **characterized in that** the third near-infrared spectroscopy device (23) is arranged in a bypass line into which the raw juice is introduced and a standing raw juice is produced for recording the third measurement data.

3. Method according to any of the preceding claims, **characterized in that** the measurement data acquired with the respective near-infrared spectroscopy device (21, 22, 23) are obtained by several measurements from different directions.

4. Method according to any of the preceding claims, **characterized in that** a length and/or a width and/or a cross-sectional area is determined with the optical image acquisition device (25).

5. Method according to any of the preceding claims, **characterized in that** the sugar beet pulp extracted from the extraction device is pressed, residual water being produced and fourth measurement data relating to the residual water produced during pressing of the sugar beet pulp residues being recorded by means of a fourth near-infrared spectroscopy device, in particular the fourth near-infrared spectroscopy device being arranged in a bypass line into which the residual water is introduced and standing residual water being produced for recording the fourth measurement data.

6. Method according to any of the preceding claims, **characterized in that** the at least one process parameter is an extraction time, which indicates the duration for which the sugar beet pulp remains in the extraction device, and/or is an extraction temperature, which indicates the temperature at which the extraction device is operated.

7. Method according to any one of claims 1 to 5, **characterized in that** the at least one process parameter is a quantity of fresh water supplied to the extraction device and/or a filling level in the extraction device.

8. Method according to any of the preceding claims, **characterized in that** the sugar beet pulp (11) is cut from sugar beet using a cutting machine (10) and a process parameter of the cutting machine (10) is set as a function of the first measurement data and/or the second measurement data and/or third measurement data and/or, if applicable, the geometric properties of the sugar beet pulp (11).

9. Method for producing sugar, wherein raw juice (14) is produced according to a method according to any of the preceding claims and sugar is produced from the raw juice (14) in subsequent process steps.

10. Method according to claim 9, **characterized in that** at least one process parameter of one of the subsequent process steps is set as a function of the first measurement data and/or the second measurement data and/or the third measurement data and/or, if applicable, the geometric properties of the sugar beet pulp (11).

11. Method according to claim 10, **characterized in that** the subsequent process step is a liming step (3) or a carbonation step (4) or a filtration step (5) or a thickening step (6) or a crystallization step (7) or a separation step (8).

12. Sugar production plant with an extraction device (20) designed as an extraction tower or diffusion trough, to which sugar beet pulp (11) can be fed and from which sugar beet pulp residues (13) and raw juice (14) can be extracted, **characterized by**

a first near-infrared spectroscopy device (21) for recording first measurement data relating to sugar beet pulp (11) which are fed to the extraction device (20), and an optical image acquisition device (25) for determining one or more geometric properties of the beet pulp (11),
and
a second near-infrared spectroscopy device (22) for acquiring second measurement data relating to sugar beet pulp residues (13) extracted from the extraction device (20) and/or
a third near-infrared spectroscopy device (23) for acquiring third measurement data relating to the raw juice (14) which is extracted from the extraction device (20),
the extraction device (20) being set up to adjust at least one process parameter of the extraction device (20) as a function of the first measurement data and of the geometric properties of the sugar beet pulp (11) and as a function of the second measurement data and/or third measurement data.

13. Sugar production plant according to claim 12, **characterized in that** the respective near-infrared spectroscopy device (21, 22, 23) comprises a plurality of detectors which are arranged in different orientations relative to the material under investigation.

14. Sugar production plant according to one of claims 12 or 13, **characterized in that** the optical image acquisition device (25) is set up to determine a length and/or a width and/or a cross-sectional area.

15. Sugar production plant according to claim 14, **characterized by** a cutting machine (10) for cutting the sugar beet pulp (11) from sugar beet, wherein the optical image capturing device (25) is arranged in the output area of the cutting machine (10).

**Revendications**

1. Procédé de production de jus brut (14) pour la fabrication de sucre, dans lequel des cossettes de betteraves sucrières (11) sont amenées à un dispositif d'extraction (20) conçu comme une colonne d'extraction ou une cuve de diffusion et des résidus de cossettes de betteraves sucrières (13) ainsi que du jus brut (14) sont retirés du dispositif d'extraction (20), **caractérisé en ce que**

un premier dispositif de spectroscopie proche infrarouge (21) enregistre des premières données de mesure concernant les cossettes de betteraves sucrières (11) qui sont amenées au dispositif d'extraction (20) et
un dispositif optique de capture d'image (25) détermine une ou plusieurs propriétés géométriques des cossettes de betteraves sucrières (11) et
un deuxième dispositif de spectroscopie proche infrarouge (22) enregistre des deuxièmes données de mesure concernant les résidus des cossettes de betteraves sucrières (13) qui sont retirés du dispositif d'extraction (20) et/ou
un troisième dispositif de spectroscopie proche infrarouge (23) enregistre des troisièmes données de mesure concernant le jus brut (14) qui est retiré du dispositif d'extraction (20),
au moins un paramètre de processus du dispositif d'extraction (20) étant réglé en fonction des premières données de mesure et des propriétés géométriques des cossettes de betteraves sucrières (11) et en fonction des deuxièmes données de mesure et/ou des troisièmes données de mesure.

2. Procédé selon la revendication 1, **caractérisé en ce que** le troisième dispositif de spectroscopie proche infrarouge (23) est disposé dans une conduite de dérivation dans laquelle le jus brut est introduit et dans laquelle un jus brut stagnat est produit pour la détection des troisièmes données de mesure.

3. Procédé selon l'une des revendications précédentes, **caractérisé en ce que** les données de mesure enregistrées avec le dispositif de spectroscopie proche infrarouge respectif (21, 22, 23) résultent de plusieurs mesures effectuées dans différentes directions.

4. Procédé selon l'une des revendications précédentes, **caractérisé en ce qu'**une longueur et/ou une largeur et/ou une section transversale sont déterminées à l'aide du dispositif optique de capture d'image (25).

5. Procédé selon l'une des revendications précédentes, **caractérisé en ce que** les cossettes de betteraves sucrières retirés du dispositif d'extraction sont pressées, ce qui produit de l'eau résiduelle, et **en ce qu'**un quatrième dispositif de spectroscopie proche infrarouge enregistre des quatrièmes données de mesure concernant l'eau résiduelle produite lors du pressage des résidus de cossettes de betteraves sucrières, en particulier le quatrième dispositif de spectroscopie proche infrarouge étant disposé dans une conduite de dérivation dans laquelle l'eau résiduelle est introduite et de l'eau résiduelle stagnante est produite pour la saisie des quatrièmes données de mesure.

6. Procédé selon l'une des revendications précédentes, **caractérisé en ce que** le au moins un paramètre de processus est un temps d'extraction qui indique la durée pendant laquelle les cossettes de betteraves sucrières restent dans le dispositif d'extraction et/ou une température d'extraction qui indique la température à laquelle le dispositif d'extraction fonctionne.

7. Procédé selon l'une des revendications 1 à 5, **caractérisé en ce que** le au moins un paramètre de processus est une quantité d'eau fraîche qui est amenée au dispositif d'extraction et/ou un niveau de remplissage dans le dispositif d'extraction.

8. Procédé selon l'une des revendications précédentes, **caractérisé en ce que** les cossettes de betteraves sucrières (11) sont coupées à partir de betteraves sucrières à l'aide d'une machine de coupe (10) et qu'un paramètre de processus de la machine de coupe (10) est réglé en fonction des premières données de mesure et/ou des deuxièmes données de mesure et/ou des troisièmes données de mesure et/ou, le cas échéant, de la ou des propriétés géométriques des cossettes de betteraves sucrières (11).

9. Procédé de fabrication de sucre, dans lequel, selon un procédé selon l'une des revendications précédentes, du jus brut (14) est produit et, dans les étapes de processus suivantes, du sucre est produit à partir du jus brut (14).

10. Procédé selon la revendication 9, **caractérisé en ce qu'**au moins un paramètre de processus de l'une des étapes de processus suivantes est réglé en fonction des premières données de mesure et/ou des deuxièmes données de mesure et/ou des troisièmes données de mesure et/ou, le cas échéant, de la ou des propriétés géométriques des cossettes de betteraves sucrières (11).

11. Procédé selon la revendication 10, **caractérisé en ce que** l'étape suivante du processus est une étape de chaulage (3) ou une étape de carbonatation (4) ou une étape de filtration (5) ou une étape d'épaississement (6) ou une étape de cristallisation (7) ou une étape de séparation (8).

12. Installation de production de sucre comprenant un dispositif d'extraction (20) conçu comme une tour d'extraction ou une cuve de diffusion, auquel sont amenées des cossettes de betteraves sucrières (11) et duquel peuvent être retirés des résidus de cossettes de betteraves sucrières (13) ainsi que du jus brut (14),
   **caractérisée par**

   un premier dispositif de spectroscopie proche infrarouge (21) pour enregistrer des premières données de mesure concernant les cossettes de betteraves sucrières (11) qui sont amenées au dispositif d'extraction (20) et un dispositif optique de capture d'image (25) pour déterminer une ou plusieurs propriétés géométriques des cossettes de betteraves (11),
   et
   un deuxième dispositif de spectroscopie proche infrarouge (22) pour enregistrer des deuxièmes données de mesure concernant les résidus des cossettes de betteraves sucrières (13) qui sont retirés du dispositif d'extraction (20) et/ou
   un troisième dispositif de spectroscopie proche infrarouge (23) pour enregistrer des troisièmes données de mesure concernant le jus brut (14) qui est retiré du dispositif d'extraction (20),
   l'installation d'extraction (20) étant conçue pour régler au moins un paramètre de processus de l'installation d'extraction (20) en fonction des premières données de mesure et des propriétés géométriques des cossettes de betteraves sucrières (11) et en fonction des deuxièmes données de mesure et/ou des troisièmes données de mesure.

13. Installation de production de sucre selon la revendication 12, **caractérisée en ce que** le dispositif de spectroscopie proche infrarouge (21, 22, 23) comprend plusieurs détecteurs qui sont disposés de manière différente par rapport au matériau examiné.

14. Installation de production de sucre selon l'une des revendications 12 ou 13, **caractérisée en ce que** le dispositif de capture d'images optique (25) est conçu pour déterminer une longueur et/ou une largeur et/ou une section transversale.

15. Installation de production de sucre selon la revendication 14, **caractérisée par** une machine de coupe (10) pour couper les cossettes de betteraves sucrières (11) issues de betteraves sucrières, le dispositif optique de capture d'image (25) étant disposé dans la zone de sortie de la machine de coupe (10).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2020027731 A1

- US 6630672 B1